# EUROPEAN PATENT APPLICATION

(11) **EP 4 477 717 A1**
(43) Date of publication of application: **18.12.2024**
(21) Application number: 23752657.9
(22) Date of filing: 23.01.2023
(51) Int. Cl.: C09D 5/16, C09D 153/00, C09D 157/10, C09D 7/63

(54) **COMPOSITION FOR COATING MATERIAL**

(30) Priority: 10.02.2022 JP 2022019466
(71) Applicant: Nippon Paint Automotive Coatings Co., Ltd., Hirakata-shi, Osaka 573-1153 (JP); Otsuka Chemical Co., Ltd., Osaka-shi, Osaka 540-0021 (JP)
(72) Inventor: AKIZUKI, Shinsuke, Hirakata-shi, Osaka 573-1153 (JP); TSUJIOKA, Hideaki, Hirakata-shi, Osaka 573-1153 (JP); OZAWA, Yu, Hirakata-shi, Osaka 573-1153 (JP); OZAKI, Kazuhisa, Hirakata-shi, Osaka 573-1153 (JP); MASUMOTO, Satoru, Tokushima-shi, Tokushima 771-0193 (JP)
(74) Representative: Mewburn Ellis LLP
(86) International application number: PCT/JP2023/001924
(87) International publication number: WO 2023/153189

(57) **Abstract**

An object of the present invention is to obtain a coating composition capable of providing a coating film that has hydrophobilicy and is resistant to adhesion of water stain dirt. The present invention provides a composition for a coating material, including a siloxane group-containing polymer (A) and a crosslinking agent (B), wherein the siloxane group-containing polymer (A) is a block copolymer including an A block and a B block, contains, in the A block, at least a structural unit derived from a siloxane group-containing vinyl monomer (a), and contains, in the B block, a structural unit derived from a hydroxyl group-containing vinyl monomer (b) and, as necessary, a structural unit derived from another vinyl monomer (c) copolymerizable with the vinyl monomers (a) and (b), the siloxane group-containing polymer (A) is a copolymer having a molecular weight distribution (Mw/Mn) of 2.0 or less and polymerized by living radical polymerization, and the composition has a dynamic glass transition temperature of 100 to 300°C under conditions of a temperature raising rate of 2°C/min and a frequency of 8 Hz when cured.

## Description

### TECHNICAL FIELD

The present invention relates to a composition for a coating material, and particularly to a composition for a coating material for providing a coating film with hydrophobilicy.

### BACKGROUND ART

A surface of a car or the like is desired to be kept clean through washing away of dirt with rainwater without vehicle washing, namely, to be so-called "vehicle wash-free." There are two types of vehicle wash-free techniques: a method in which a surface is made hydrophilic and dirt is washed away with rainwater; and a method in which a surface is made water-repellent and water droplets are blown off together with dirt during traveling. A water-repellent appearance that repels water well tends to be preferred by people in an appearance of a luxury car or the like.

In order to make a surface of a coating film water-repellent, a fluorine-based material or a silicone-based material is often used as a water-repellent material. Fluorine-based materials are effective because of their high hydrophobilicy. At the present time, however, fluorine-based materials are expensive and are difficult to use for general purpose coating materials, and there are also problems such as environmental pollution; therefore, fluorine-based materials are not easy to use. Silicone-based materials have advantages of being easily used for general purposes, and therefore have been developed earlier. For example, JP-A-11-293184 (Patent Document 1) proposes a polymer composition containing a siloxane macromonomer having unsaturated bonds at both ends. However, although the polymer composition of Patent Document 1 has a sufficient antifouling function against common mud dirt and carbon dirt such as soot, for example, water stain dirt contained in tap water at the time of car washing and water stain dirt derived from muddy water containing a large amount of minerals are adhered in the form of biting into a coating film, and thus cannot be easily removed once adhered. It has been found that such a coating film to which water stain adheres catches mud dirt or carbon dirt, and the dirt cannot be easily removed.

### PRIOR ART DOCUMENT

### PATENT DOCUMENT

Patent Document 1: JP-A-11 -293184

### SUMMARY OF THE INVENTION

### PROBLEMS TO BE SOLVED BY THE INVENTION

An object of the present inventors is to obtain a water-repellent coating composition capable of allowing dirt to be easily removed and capable of providing a coating film that is resistant to adhesion of water stain dirt resulting from solidification of mineral components contained in water that cannot be easily removed once adhered.

### SOLUTIONS TO THE PROBLEMS

That is, the present invention provides:
[1] a composition for a coating material, including a siloxane group-containing polymer (A) and a crosslinking agent (B), wherein the siloxane group-containing polymer (A) is a block copolymer including an A block and a B block, contains, in the A block, at least a structural unit derived from a siloxane group-containing vinyl monomer (a), and contains, in the B block, a structural unit derived from a hydroxyl group-containing vinyl monomer (b) and, as necessary, a structural unit derived from another vinyl monomer (c) copolymerizable with the vinyl monomers (a) and (b), the siloxane group-containing polymer (A) is a copolymer having a molecular weight distribution (Mw/Mn) of 2.0 or less and polymerized by living radical polymerization, and the composition has a dynamic glass transition temperature of 100 to 300°C under conditions of a temperature raising rate of 2°C/min and a frequency of 8 Hz when cured. In addition, the present invention further provides the following embodiments.
[2] The composition for a coating material according to [1], wherein the siloxane group-containing polymer (A) is an AB-type diblock copolymer or an ABA-type triblock copolymer.
[3] The composition for a coating material according to [1] or [2], wherein the siloxane group-containing polymer (A) has a weight average molecular weight (Mw) of 5,000 to 100,000.
[4] The composition for a coating material according to any one of [1] to [3], wherein the living radical polymerization is a method in which the polymerization is performed using an organic tellurium compound represented by a formula (1) below: 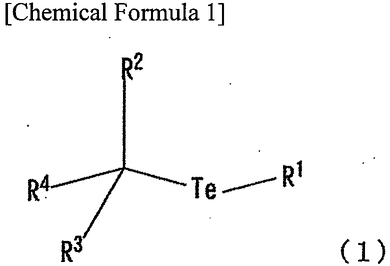 wherein R¹ represents a C₁ to C₈ alkyl group, aryl group, substituted aryl group, or aromatic heterocyclic group, R² and R³ each represent a hydrogen atom or a C₁ to C₈ alkyl group, R⁴ represents an aryl group, a substituted aryl group, an aromatic heterocyclic group, an acyl group, an oxycarbonyl group, or a cyano group.
[5] The coating composition according to any one of [1] to [4], wherein the siloxane group-containing polymer (A) is a (meth)acrylic copolymer.
[6] The coating composition according to any one of [1] to [5], wherein the other copolymerizable vinyl monomer (c) is an alicyclic hydrocarbon group-containing (meth)acrylate.
[7] The composition for a coating material according to any one of [1] to [6], further including a hydroxyl group-containing polymer (C).
[8] The composition for a coating material according to any one of [1] to [7], wherein a mixing ratio of the siloxane group-containing polymer (A) and the hydroxyl group-containing polymer (C) is 15 : 85 to 80 : 20 in terms of a weight ratio of the siloxane group-containing polymer (A) : the hydroxyl group-containing polymer (C).
[9] The composition for a coating material according to any one of [1] to [8], wherein the siloxane group-containing vinyl monomer (a) has a number average molecular weight (Mn) of 500 to 50,000.
[10] The composition for a coating material according to any one of [1] to [9], wherein the crosslinking agent (B) is a combination of an alicyclic polyisocyanate (B-1) and an aliphatic polyisocyanate (B-2).

### EFFECTS OF THE INVENTION

In the present invention, hydrophobilicy can be imparted to a coating film by mixing a siloxane group-containing polymer. Since the siloxane group-containing polymer is firmly incorporated in a coating film through a crosslinking reaction of the coating film, the siloxane group-containing polymer does not separate or bleed, and can stably retain water-repelling performance for a long period of time. In addition, when the siloxane group-containing polymer is a block copolymer, a moiety contributing to the crosslinking reaction of the coating film and a siloxane moiety imparting hydrophobilicy are separated in the polymer molecule, so that the function of each moiety is exerted without interference from the other moiety, and the function of fixing to a crosslinked moiety and the function of a polysiloxane moiety for hydrophobilicy can be exerted clearly and for a long time. Owing to this, hydrophobilicy can be exerted even at a small formulation of the siloxane group-containing polymer.

When a coating film formed from the composition for a coating material of the present invention is present on a surface of a car or the like, hydrophobilicy can be stably retained for a long period of time, so that rainwater or the like is scattered in the form of water droplets (ball-like water droplets) during traveling. Therefore, dirt such as dust present on the coating film is eliminated from the coating film by rainwater containing the dirt during traveling when it rains. Since the siloxane moiety also has oil repellency, adhesion of an oily substance is reduced, and oily dirt is also reduced. In addition, with the coating film formed from the coating composition of the present invention, the problem of water stain adhesion could be greatly improved by controlling the dynamic glass transition temperature (Tg) of the coating film. It is considered that even if water droplets remain on the coating film and dry to form water stain, the coating film does not physically firmly adhere, so that dirt does not accumulate with water stain as a trigger.

In addition, when the siloxane group-containing polymer (A) of the present invention is used, since the siloxane group moiety is firmly present in the coating film without being separated and bleeding, not only its performance can be stably exerted for a long period of time, but also other performance of the coating film, for example, tensile strength, tear strength, or wear resistance, is retained without being adversely affected, so that these performances are also kept high.

### DETAILED DESCRIPTION

The composition for a coating material of the present invention includes a siloxane group-containing polymer (A) and a crosslinking agent (B), and may include an additional hydroxyl group-containing polymer (C), as necessary. Each of the components will be described.

### <Siloxane group-containing polymer (A)>

The siloxane group-containing polymer (A) is a block copolymer including an A block and a B block, contains, in the A block, at least a structural unit derived from a siloxane group-containing vinyl monomer (a), and contains, in the B block, structural units derived from a hydroxyl group-containing vinyl monomer (b) and, as necessary, another vinyl monomer (c) copolymerizable with the vinyl monomers (a) and (b), and the siloxane group-containing polymer (A) is a copolymer having a molecular weight distribution (Mw/Mn) of 2.0 or less and polymerized by living radical polymerization.

Preferably, the siloxane group-containing polymer (A) does not contain any fluorine group-containing group in the siloxane group-containing polymer (A).

The siloxane group-containing polymer (A) is preferably a (meth)acrylate-based copolymer. The (meth)acrylate-based copolymer is a copolymer containing a structural unit derived from a (meth)acrylate as a main component (50% by weight or more).

The content of the structural unit derived from the (meth)acrylate in the siloxane group-containing polymer (A) is preferably 80% by weight or more, and more preferably 90% by weight or more in 100% by weight of the siloxane group-containing polymer (A). The siloxane group-containing polymer (A) may be composed only of a structural unit derived from a (meth)acrylic monomer.

In the present description, the "vinyl monomer" refers to a monomer having a radically polymerizable carbon-carbon double bond in the molecule. The "structural unit derived from a vinyl monomer" refers to a structural unit in which a radically polymerizable carbon-carbon double bond of a vinyl monomer has been converted into a carbon-carbon single bond through polymerization. "(Meth)acrylate" means "at least one of acrylate and methacrylate". The "structural unit derived from a (meth)acrylate" refers to a structural unit in which a radically polymerizable carbon-carbon double bond of a (meth)acrylate has been polymerized and has formed a carbon-carbon single bond. "(Meth)acrylic" means "at least one of acrylic and methacrylic".

The siloxane group-containing vinyl monomer (a) is not particularly limited as long as it is a vinyl monomer having a siloxane group (more specifically, a polysiloxane group). The siloxane group-containing vinyl monomer is more specifically represented by the following formula I: 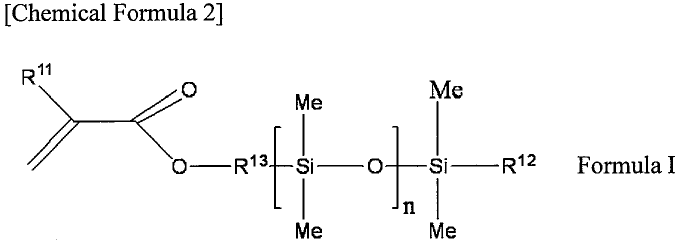 wherein Me represents a methyl group, R¹¹ represents a hydrogen atom or a methyl group, R¹² represents a hydrogen atom or an alkyl group having 1 to 4 carbon atoms, R¹³ represents an alkyl group having 1 to 6 carbon atoms in which an oxygen atom may be interposed, and n represents 0 or an integer of 1 or more. As the siloxane group-containing vinyl monomer (a) of the formula (I), a siloxane group (more specifically, polysiloxane group)-containing (eth)acrylate that is a reaction product of an alcohol group present at an end of a polysiloxane represented by the following formula II: 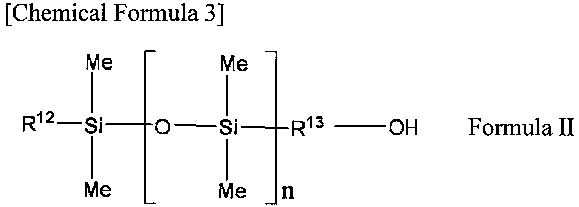 with (meth)acrylic acid is suitable. In the formula I, R¹¹ represents a hydrogen atom or a methyl group. In the formulas I and II, R¹² is a hydrogen atom or an alkyl group having 1 to 4 carbon atoms, and Me is a methyl group. R¹³ is an alkyl group having 1 to 6 carbon atoms. n is 0 or an integer of 1 or more, and n is preferably 6 to 300.

More specifically, the siloxane group-containing vinyl monomer (a) having the formula (I) is commercially available from Shin-Etsu Chemical Co., Ltd. (modified silicone oil series) and JNC Corporation (Silaplane (registered trademark)), and examples thereof include X-22-2404 [functional group equivalent (g/mol): 420] [number average molecular weight: 420], X-22-174ASX [functional group equivalent (g/mol): 900] [number average molecular weight: 900], X-22-174BX [functional group equivalent (g/mol): 2,300] [number average molecular weight: 2,300], KF-2012 [functional group equivalent (g/mol): 4,600], X-22-2426 [functional group equivalent (g/mol): 12,000] [number average molecular weight: 12,000] manufactured by Shin-Etsu Chemical Co., Ltd., and FM-0711 [number average molecular weight: 1,000], FM-0721 [number average molecular weight: 5,000], FM-0725 [number average molecular weight: 10,000] manufactured by JNC Corporation (the above listed are all commercial names). When the siloxane group-containing vinyl monomer is monofunctional, the functional group equivalent [g/mol] can be regarded as the number average molecular weight (Mn) of the siloxane group-containing vinyl monomer (a) with respect to 1 mol of siloxane.

The functional group equivalent (g/mol) of the siloxane group-containing vinyl monomer (a) is preferably 500 to 50,000 g/mol, more preferably 600 to 3,000 g/mol, and particularly preferably 700 to 1,200 g/mol from the viewpoint of polymerizability. In particular, superior compatibility is exhibited at 700 to 1,200 g/mol. The functional group is a vinyl group, and the siloxane group-containing vinyl monomer (a) is preferably monofunctional from the viewpoint of polymerizability.

The number average molecular weight (Mn) of the siloxane group-containing vinyl monomer (a) is preferably 500 to 50,000, more preferably 600 to 3,000, and particularly preferably 700 to 1,200 from the viewpoint of releasability. In particular, superior compatibility is exhibited at 700 to 1,200.

The hydroxyl group-containing vinyl monomer (b) is a vinyl monomer having a hydroxyl group in the molecule, and more specifically, a hydroxyl group-containing (meth)acrylate that is a reaction product of an alkyl polyol and (meth)acrylic acid is suitable. Examples of the hydroxyl group-containing vinyl monomer (b) include hydroxyalkyl (meth)acrylates such as 2-hydroxyethyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 8-hydroxyoctyl (meth)acrylate, 10-hydroxydecyl (meth)acrylate, (4-hydroxymethylcyclohexyl) methyl (meth)acrylate, and glycerin mono(meth)acrylate; and polyethylene glycol mono(meth)acrylates such as diethylene glycol mono(meth)acrylate, triethylene glycol mono(meth)acrylate, triethylene glycol mono(meth)acrylate, tetraethelene glycol mono(meth)acrylate, hexaethylene glycol mono(meth)acrylate, and octaethylene glycol mono(meth)acrylate.

The other vinyl monomer (c) copolymerizable with the vinyl monomers (a) and (b) may be any vinyl monomer copolymerizable with the vinyl monomers (a) and (b), and specifically, examples thereof include:
linear alkyl group-containing (meth)acrylates such as methyl (meth)acrylate, ethyl (meth)acrylate, n-propyl (meth)acrylate, n-butyl (meth)acrylate, n-pentyl (meth)acrylate, n-hexyl (meth)acrylate, and n-octyl (meth)acrylate;
branched alkyl group-containing (meth)acrylates such as isopropyl (meth)acrylate, isobutyl (meth)acrylate, sec-butyl (meth)acrylate, tert-butyl (meth)acrylate, and isooctyl (meth)acrylate;
alicyclic hydrocarbon group-containing (meth)acrylates including: cyclic alkyl group-containing (meth)acrylates having a monocyclic structure such as cyclohexyl (meth)acrylate, cyclohexyloxyalkyl (meth)acrylate, and t-butylcyclohexyloxyethyl (meth)acrylate; and cyclic alkyl group-containing (meth)acrylates having a polycyclic structure such as isobornyl (meth)acrylate, dicyclopentanyl (meth)acrylate, and adamantyl (meth)acrylate;
carboxyl group-containing monomers such as dimer acids of an acrylic acid such as (meth)acrylic acid or β-carboxyethyl acrylate;
phosphoric acid group-containing (meth)acrylates including: phosphoric acid ester of polyethylene glycol mono(meth)acrylate; phosphoric acid esters of polypropylene glycol mono(meth)acrylate such as (mono(propylene glycol monomethacrylate) phosphate; and alkylene (meth)acrylate phosphates such as methylene (meth)acrylate phosphate, trimethylene (meth)acrylate phosphate, propylene (meth)acrylate phosphate, and tetramethylene (meth)acylate phosphate;
olefinsulfonic acids such as ethylenesulfonic acid, allylsulfonic acid, and methallylsulfonic acid, 2-acrylamido-2-methylpropanesulfonic acid, styrenesulfonic acid, and sulfonic acid group-containing monomers or salts thereof;
(meth)acrylamide-based monomers including alkoxyalkyl (meth)acrylamide-based monomers such as methoxymethyl (meth)acrylamide, ethoxymethyl (meth)acrylamide, propoxymethyl (meth)arylamide, isopropoxymethyl (meth)acrylamide, n-butoxymethyl (meth)acrylamide, and isobutoxymethyl (meth)acrylamide, (meth)acryloylmorpholine, dimethyl (meth)acrylamide, diethyl (meth)acrylamide, and (meth)acrylamide N-methylol (meth)acrylamide;
glycidyl (meth)acrylate, furfuryl (meth)acrylate, tetrahydrofurfuryl (meth)acrylate, methyl vinyl ketone, styrene, α-methylstyrene, N-vinylcaprolactam, and vinyl acetate. Among them, the alicyclic hydrocarbon group-containing (meth)acrylates are preferable, and in particular, the cyclic alkyl group-containing (meth)acrylates having a polycyclic structure are preferable from the viewpoint of balance of characteristic value of a coating film.

In the siloxane group-containing polymer (A), the content of a structural unit derived from the polysiloxane group-containing vinyl monomer (a) is preferably 5 to 35% by weight, the content of a structural unit derived from the hydroxyl group-containing vinyl monomer (b) is preferably 5 to 35% by weight, and the content of a structural unit derived from the additional vinyl monomer (c) copolymerizable with the vinyl monomers (a) and (b) is preferably 30 to 90% by weight. When the amount of the siloxane group-containing vinyl monomer (a) is large to some extent, hydrophobilicy is imparted to a coating film. It, however, is unfavorable that the amount of the structural unit derived from the siloxane group-containing vinyl monomer (a) is excessively large because a coating film is adversely affected. The amount of the structural unit derived from the hydroxyl group-containing vinyl monomer (b) is preferably as larger as possible because copolymerization occurs at a large number of reaction sites. The amount of the structural unit derived from the hydroxyl group-containing vinyl monomer (b) can be controlled by the hydroxyl value of the siloxane group-containing polymer (A), and the hydroxyl value of the siloxane group-containing polymer (A) is preferably 30 to 250 mg KOH/g, and particularly preferably 70 to 170 mg KOH/g. When the hydroxyl value is less than 30 mg KOH/g, there is a possibility that the siloxane group-containing polymer (A) is not sufficiently reacted with isocyanate groups and a coating film having a low crosslinking density is formed, whereas when the hydroxyl value is more than 250 mg KOH/g, there is a possibility that the water resisting performance of a coating film is deteriorated.

The siloxane group-containing polymer (A) is a block copolymer including an A block and a B block, wherein a structural unit derived from a polysiloxane group-containing vinyl monomer (a) is contained in the A block and a structural unit derived from a hydroxyl group-containing vinyl monomer (b) is contained in the B block. The B block preferably further contains a structural unit derived from an additional vinyl monomer (c) copolymerizable with the vinyl monomers (a) and (b). The block copolymer is preferably an AB-type diblock copolymer or an ABA-type triblock copolymer. More specifically, the A block in the block copolymer contains a structural unit derived from the polysiloxane group-containing vinyl monomer (a), and can impart water/oil repellency to a coating film. In addition, the B block of the block copolymer contains a structural unit derived from the hydroxyl group-containing vinyl monomer (b), and can be crosslinked with the crosslinking agent (B) to form a three-dimensional network structure, so that durability can be improved. That is, since the hydroxyl group-containing vinyl monomer (b) having reactivity with the crosslinking agent is not introduced into the A block but concentrated in the B block, the functions of the respective polymer blocks, namely, the A block and the B block can be clearly divided.

When the A block and the B block have different polarities or are incompatible with each other, or when there is a polymer compatible with the A block or the B block, a microphase-separated structure may be formed in the coating film. In particular, when a coating film has a microphase-separated structure, the functions of the respective polymer blocks, namely, the A block and the B block are most clearly divided, so that superior functions are exhibited. It is confirmed by a transmission micrograph (TEM photograph) or the like obtained by thinly slicing a coating film that the microphase-separated structure microscopically has an islands-in-the-sea (spherical) structure, a columnar (linear) structure, a lamellar structure, or a worm-like structure.

When the copolymer is not a block polymer but a randomly copolymerized polymer, a structural unit derived from a polysiloxane group-containing vinyl monomer (a) and a structural unit derived from a hydroxyl group-containing vinyl monomer (b) having reactivity with a crosslinking agent are mixed, and thus the copolymer may be difficult to exhibit functions or may be poor in compatibility depending on the composition.

In an adoptable method for producing the AB-type diblock copolymer as the siloxane group-containing polymer (A) of the present invention, an A block is produced first, and then a monomer for a B block is polymerized with the A block; a B block is produced first, and then a monomer for an A block is polymerized with the B block; or an A block and a B block are produced separately, and then the A block is coupled with the B block.

For example, the AB-type diblock copolymer is obtained by sequentially polymerizing vinyl monomers that will constitute blocks by a radical polymerization method. Specifically, an adoptable production method includes a step of polymerizing a vinyl monomer for constituting one of an A block and a B block to generate the one block, and a step of, after generating the one block, polymerizing a vinyl monomer for constituting the other block of the A block and the B block to generate the other block.

It is difficult to obtain the effect of the present invention when a (meth)acrylic polymer obtained by conventional radical polymerization (free radical polymerization: FRP) is used. In free radical polymerization, radical species are continuously generated during the reaction and added to vinyl monomers, and the polymerization proceeds. Therefore, in free radical polymerization, a polymer in which a growing terminal radical has been deactivated in the middle of the reaction or a polymer grown by a radical species newly generated during the reaction is generated. Therefore, when a (meth)acrylic polymer containing a crosslinkable functional group is produced by free radical polymerization, a polymer containing no structural unit derived from a crosslinkable functional group-containing vinyl monomer having a relatively low molecular weight is produced.

A crosslinkable (meth)acrylic polymer resulting from polymerization by free radical polymerization is uneven in the composition of the polymer and contains no crosslinkable functional group-containing vinyl monomer having a relatively low molecular weight, so that the polymer includes a polymer chain that cannot participate in crosslinking. Furthermore, the composition is uneven, and for example, a homopolymer in which only a siloxane-containing vinyl monomer is polymerized or the like is generated, which will cause deterioration of the compatibility of resins and may cause coating film defects such as cloudiness and cissing.

Therefore, the copolymer is a copolymer resulting from polymerization by living radical polymerization. By living radical polymerization, a polymer having more uniform molecular weight and composition as compared with the free radical polymerization or the like can be obtained, and generation of low molecular weight components or the like can be controlled, so that bleeding out or the like with time is less likely to occur. The living radical polymerization method can be categorized, in terms of difference in technique to stabilize polymerization growth terminals, for example into a method using a transition metal catalyst (ATRP method), a method using a sulfur-based reversible chain transfer agent (RAFT method), and a method using an organic tellurium compound (TERP method). Since the ATRP method uses an amine-based complex, there is a case where the ATRP method cannot be used unless an acidic group of a vinyl monomer having an acidic group is protected. In the RAFT method, when various monomers are used, it is difficult to attain a low molecular weight distribution, and there may occur defects such as sulfur odor and coloring. Among these methods, the TERP method is preferably used from the viewpoint of diversity of monomers that can be used, molecular weight control in a polymer region, uniform composition, or coloring. The TERP method is a method of polymerizing a radically polymerizable compound (vinyl monomer) using an organic tellurium compound as a chain transfer agent, and examples thereof include the methods described in WO 2004/14848 A, WO 2004/14962 A, WO 2004/072126 A, and WO 2004/096870 A.

As the TERP method, a method of conducting polymerization using an organic tellurium compound represented by the following formula (1) is preferable, and a method of conducting polymerization using a mixture of an organic tellurium compound represented by the following formula (1) and an organic ditelluride compound represented by the following formula (2) is more preferable.

The following formula (1): 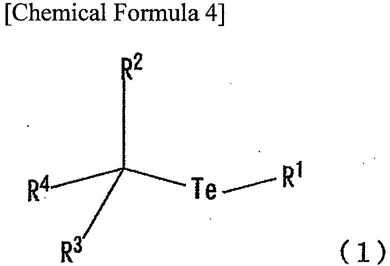 wherein R¹ represents a C₁ to C₈ alkyl group, aryl group, substituted aryl group, or aromatic heterocyclic group; R² and R³ each represent a hydrogen atom or a C₁ to C₈ alkyl group; R⁴ represents an aryl group, a substituted aryl group, an aromatic heterocyclic group, an acyl group, an oxycarbonyl group, or a cyano group.

Formula (2): (R¹Te)₂ (2)

wherein R¹ is the same as described above.

Examples of the organic tellurium compound represented by the formula (1) include the organic tellurium compounds described in WO 2004/14848 A, WO 2004/14962 A, WO 2004/072126 A, and WO 2004/096870 A, such as ethyl-2-methyl-2-n-butyltellanyl-propionate, ethyl-2-n-butyltellanyl-propionate, and (2-hydroxyethyl)-2-methyl-methyltellanyl-propionate. Examples of the organic ditelluride compound represented by the formula (2) include dimethylditelluride and dibutylditelluride.

In the polymerization step, a vinyl monomer, an organic tellurium compound represented by the general formula (1), and, for the purpose of accelerating the reaction, controlling the molecular weight and molecular weight distribution, and the like depending on the type of the vinyl monomer, an organic ditelluride compound represented by the formula (2) are mixed in a vessel purged with an inert gas. At this time, examples of the inert gas include nitrogen, argon, and helium. Argon and nitrogen are preferable. The amount of the vinyl monomer to be used may be appropriately adjusted according to the characteristic value of an intended copolymer.

The polymerization is usually carried out without a solvent, but an organic solvent commonly used in radical polymerization may be used. Examples of the solvent that can be used include benzene, toluene, N,N-dimethylformamide (DMF), dimethyl sulfoxide (DMSO), acetone, chloroform, carbon tetrachloride, tetrahydrofuran (THF), ethyl acetate, and trifluoromethylbenzene. In addition, an aqueous solvent can also be used, and examples thereof include water, methanol, ethanol, isopropanol, n-butanol, ethyl cellosolve, butyl cellosolve, and 1-methoxy-2-propanol. The amount of the solvent to be used may be appropriately adjusted, and for example, the amount of the solvent is preferably 0.01 to 100 ml for 1 g of the vinyl monomer. The reaction temperature and the reaction time may be appropriately adjusted according to the molecular weight or molecular weight distribution of a copolymer to be obtained, and stirring is usually conducted at 0°C to 150°C for 1 minute to 100 hours. After completion of the polymerization reaction, the reaction mixture obtained is subjected to removal of the solvent used and the residual vinyl monomer, and the like with an ordinary separation and purification means, so that an intended copolymer can be separated.

Living radical polymerization is polymerization in which a molecular chain grows without the polymerization reaction being hindered by a side reaction such as a termination reaction or a chain transfer reaction. In living radical polymerization, all polymer chains are polymerized while uniformly reacting with a monomer during the reaction, and the composition of all polymers approaches uniform. When such a crosslinkable (meth)acrylic polymer is crosslinked using a crosslinking agent, almost all polymers can participate in crosslinking between polymer chains.

The siloxane group-containing polymer (A) is obtained through copolymerization of a polysiloxane group-containing vinyl monomer (a), a hydroxyl group-containing vinyl monomer (b), and an additional unsaturated monomer (c) copolymerizable therewith as described above, and preferably has a number average molecular weight (Mn) of 3,000 to 100,000, and further preferably has a molecular weight distribution (Mw/Mn) of the siloxane group-containing polymer (A) of 2.0 or less.

When the number average molecular weight (Mn) of the siloxane group-containing polymer (A) is as relatively high as 3,000 to 100,000, bleeding out hardly occurs and initial surface characteristics can be maintained for a long period of time. The weight average molecular weight (Mw) of the siloxane group-containing polymer (A) is preferably 5,000 to 100,000. The lower limit value of Mw is more preferably 8,000. The upper limit value of Mw is more preferably 80,000, still more preferably 30,000, and most preferably 20,000. When the number average molecular weight and the weight average molecular weight are lower than the lower limit values, bleeding is likely to occur, and conversely, when the number average molecular weight and the weight average molecular weight are higher than the upper limit values, handling is difficult due to an increase in viscosity, and cloudiness may occur.

When the molecular weight distribution (Mw/Mn) of the siloxane group-containing polymer (A) is 2.0 or less, the molecular weight distribution is sharp and a transparent coating film is uniformly obtained with good compatibility with a coating film. The Mw/Mn of the block copolymer is preferably 1.8 or less, more preferably 1.5 or less, and still more preferably 1.3 or less. In the present invention, the molecular weight distribution is determined by (weight average molecular weight (Mw) of block copolymer)/(number average molecular weight (Mn) of block copolymer), and the smaller the Mw/Mn is, the narrower the width of the molecular weight distribution of the copolymer becomes, the more uniform the molecular weight of the copolymer becomes, and when the value of the molecular weight distribution is 1.0, the width of the molecular weight distribution is narrowest. And then, as the Mw/Mn is larger, a polymer having a smaller molecular weight or a polymer having a larger molecular weight than the molecular weight of a designed polymer is included more and compatibility may be deteriorated. A siloxane group-containing polymer having an excessively small molecular weight dissolves but causes troubles with a coating film such as bleeding out, whereas a siloxane group-containing polymer having an excessively large molecular weight is poor in solubility in other polymer resins and causes a trouble such as clouding of a coating film.

### <Crosslinking agent (B)>

The crosslinking agent to be blended in the composition for a coating material of the present invention is not particularly limited, but is one that undergoes a crosslinking reaction with a hydroxyl group present in the siloxane group-containing polymer (A), and examples thereof include a polyisocyanate-based crosslinking agent.

The polyisocyanate-based crosslinking agent refers to a compound having two or more isocyanate groups in one molecule. Examples of the polyisocyanate-based crosslinking agent include aliphatic polyisocyanates, alicyclic polyisocyanates, araliphatic polyisocyanates, aromatic polyisocyanates, and derivatives of these polyisocyanates. As the polyisocyanate-based crosslinking agent, only one agent may be used alone, or two or more agents may be used in combination.

Examples of the aliphatic polyisocyanate to be used as the crosslinking agent (B) include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, and 2,6-diisocyanatomethylcaproate; and aliphatic triisocyanates such as lysine ester triisocyanate, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanate include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4,4'-methylenebis(cyclohexyl isocyanate), methyl-2,4-cyclohexane diisocyanate, methyl-2,6-cyclohexane diisocyanate, 1,3- or 1,4-bis(isocyanatomethyl)cyclohexane (common name: hydrogenated xylylene diisocyanate) or a mixture thereof, and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the araliphatic polyisocyanate include araliphatic diisocyanates such as 1,3- or 1,4-xylylene diisocyanate or a mixture thereof, (ω,ω'-diisocyanato-1,4-diethylbenzene, 1,3- or 1,4-bis(1-isocyanato-1-methylethyl)benzene (common name: tetramethylxylylene diisocyanate) or a mixture thereof; and araliphatic triisocyanates such as 1,3,5-triisocyanatomethylbenzene.

Examples of the aromatic polyisocyanate include aromatic diisocyanates such as m-phenylene diisocyanate, p-phenylene diisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylene diisocyanate or a mixture thereof, 4,4'-toluidine diisocyanate, and 4,4'-diphenyl ether diisocyanate; aromatic triisocyanates such as triphenylmethane-4,4',4‴-triisocyanate, 1,3,5-triisocyanatobenzene, and 2,4,6-triisocyanatotoluene; and aromatic tetraisocyanates such as 4,4'-diphenylmethane-2,2',5,5'-tetraisocyanate.

The aromatic polyisocyanate may be yellowed by ultraviolet rays and is unfavorable from the viewpoint of weather resistance. Aliphatic polyisocyanates are preferable from the viewpoint of weather resistance and the like, and alicyclic polyisocyanates may be used in combination, as necessary.

In the present invention, the crosslinking agent (B) is preferably a combination of an alicyclic polyisocyanate (B-1) and an aliphatic polyisocyanate (B-2) among the polyisocyanate crosslinking agents listed above. A specific example of the alicyclic polyisocyanate (B-1) is isophorone diisocyanate, a specific example of the aliphatic polyisocyanate (B-2) is hexamethylene diisocyanate or pentamethylene diisocyanate, and a combination thereof is more preferable. In the case of this combination, it becomes easy to control the range of a dynamic glass transition temperature. These polyisocyanate-based crosslinking agents may be in the form of derivatives described below.

Examples of the derivative of a polyisocyanate-based crosslinking agent include dimer, trimer, biuret, allophanate, carbodiimide, uretdione, uretimine, isocyanurate, oxadiazinetrione, polymethylene polyphenyl polyisocyanate (crude MDI, polymeric MDI), and crude TDI of the polyisocyanate-based crosslinking agents described above. In particular, biuret, allophanate, and isocyanurate are preferable, and isocyanurate is most preferable from the viewpoint of balance of characteristic value of a coating film.

The polyisocyanate-based crosslinking agent is usually used with an isocyanate group blocked with a blocking agent. The blocking agent is stable at ordinary temperature but can regenerate a free isocyanate group when heated to or above the dissociation temperature thereof. Examples of the blocking agent include a compound having an active hydrogen group (e.g., alcohols and oximes). Examples of the blocking agent that may preferably be used include monohydric alkyl (or aromatic) alcohols such as n-butanol, n-hexyl alcohol, 2-ethylhexanol, lauryl alcohol, phenol carbinol and methylphenyl carbinol; cellosolves such as ethylene glycol monohexyl ether and ethylene glycol mono-2-ethylhexyl ether; polyether-type both-ended diols such as polyethylene glycol, polypropylene glycol and polytetramethylene ether glycol phenol; polyester-type both-ended polyols obtained from a diol such as ethylene glycol, propylene glycol or 1,4-butanediol and a dicarboxylic acid such as oxalic acid, succinic acid, adipic acid, suberic acid or sebacic acid; phenols such as para-t-butylphenol and cresol; oximes such as dimethyl ketoxime, methyl ethyl ketoxime, methyl isobutyl ketoxime, methyl amyl ketoxime and cyclohexanone oxime; and lactams typified by ε-caprolactam and γ-butyrolactam. Among them, a blocked isocyanate compound obtained by blocking hexamethylene diisocyanate or a nurate form thereof with a blocking agent is more suitably used.

In the composition for a coating material of the present invention, from the viewpoint of the curability of a coating film, the stability of the composition, and the like, the mixing ratio of the siloxane group-containing polymer (A) and the polyisocyanate-based crosslinking agent is such that the ratio of the isocyanate group equivalent of the polyisocyanate-based crosslinking agent/the hydroxyl group equivalent of the siloxane group-containing polymer (A) is preferably 0.5 to 2.5, more preferably 0.9 to 1.5. When the ratio of the isocyanate group equivalent of the polyisocyanate-based crosslinking agent/the hydroxyl group equivalent of the siloxane group-containing polymer (A) is less than 0.5, the crosslinkability is insufficient, and when the ratio is more than 2.5, yellowing by heat tends to occur.

### <Hydroxyl group-containing polymer (C)>

In the composition for a coating material of the present invention, a hydroxyl group-containing polymer (C) may be blended, as necessary. Examples of the hydroxyl group-containing polymer (C) include acrylic resin, silicone acrylic resin, polyester resin, alkyd resin, silicone polyester resin, epoxy resin, epoxy ester resin, and fluororesin, and among these, acrylic resin, polyester resin, alkyd resin, epoxy resin, and epoxy ester resin can be suitably used. From the viewpoint of controlling functional groups and ease of production, an acrylic resin containing a hydroxyl group (hereinafter sometimes referred to as "acrylic polyol resin") is preferable as the hydroxyl group-containing polymer (C).

The acrylic polyol resin can be prepared using one kind or two or more kinds of unsaturated monomers commonly used in the preparation of acrylic resin, such as a (meth)acrylic monomer, a hydroxyl group-containing acrylic monomer, and other copolymerizable monomers.

The (meth)acrylic monomer is not particularly limited, and examples thereof include alkyl esters such as methyl (meth)acrylate, ethyl (meth)acrylate, propyl (meth)acrylate, n, i or t-butyl (meth)acrylate, 2-ethylhexyl (meth)acrylate, and lauryl (meth)acrylate; amides such as (meth)acrylamide; and nitriles such as (meth)acrylonitrile.

As the hydroxyl group-containing acrylic monomer, one used as the hydroxyl group-containing vinyl monomer (b) used in the synthesis of the siloxane group-containing polymer (A) is suitably used. Furthermore, the additional copolymerizable monomer is a monomer copolymerizable with an acrylic monomer, and examples thereof include styrenes such as styrene and α-methylstyrene; and vinyl compounds such as vinyl acetate.

The method for producing the acrylic polyol resin is not particularly limited, and for example, the acrylic polyol resin can be produced by solution polymerization such as normal radical polymerization.

The acrylic polyol resin preferably has a weight average molecular weight (Mw) of 1,000 to 20,000. When the weight average molecular weight is in the above range, the balance of the viscosity of the composition for a coating material and coating film properties such as the weather resistance of a resulting coating film can be maintained in a good range.

The quantitative ratio of the siloxane group-containing polymer (A) and the hydroxyl group-containing polymer (C) is preferably a weight ratio of 15 : 85 to 80 : 20 in the weight ratio of the siloxane group-containing polymer (A) : the hydroxyl group-containing polymer (C). In the above range, a microphase separation can be controlled through compatibilization of the hydroxyl group-containing polymer (C) with the siloxane group-containing polymer (A) for forming a microphase-separated structure, and a structural unit derived from the polysiloxane group-containing vinyl monomer (a) of a polymer block of chain A makes it possible to efficiently impart an antifouling function such as water/oil repellency to a coating film. The weight ratio of the siloxane group-containing polymer (A) : the hydroxyl group-containing polymer (C) is preferably 20 : 80 to 75 : 25, and more preferably 30 : 70 to 60 : 40.

### <Composition for coating material>

The composition for a coating material of the present invention can be prepared by mixing the respective components to constitute the composition for a coating material with a means that is commonly used. The composition for a coating material may contain a pigment, a surface conditioning agent (a defoaming agent, a leveling agent, etc.), a pigment dispersing agent, a plasticizer, a film-forming assistant, an ultraviolet absorber, an antioxidant, a flame retardant, an antistatic agent, an electrostatic auxiliary, a heat stabilizer, a light stabilizer, a solvent (water, organic solvent), and other additives, as necessary.

The composition for a coating material of the present invention is applied to an article to be coated, and then cured at preferably 70 to 170°C, more preferably 70 to 160°C, and still more preferably 70 to 150°C.

The coating composition of the present invention is required to have a dynamic glass transition temperature of 100°C to 300°C, preferably 110°C to 250°C, and more preferably 120°C to 150°C under conditions of a temperature raising rate of 2°C/min and a frequency of 8 Hz when cured. When the dynamic glass transition temperature (dynamic Tg) is in this temperature range, it is possible to inhibit water stain from biting into and adhering to a coating film during the formation of the water stain. Therefore, even in a situation where dirt is further adhered, it is possible to inhibit accumulation of dirt triggered by water stain.

The dynamic glass transition temperature (dynamic Tg) is determined in the following manner. First, a coating composition is applied to a polypropylene test plate with an air spray such that the dry film thickness of a single film is 30 µm, and then the coating composition is heated and cured at 140°C for 30 minutes to form a coating film. Next, the coating film is peeled off from the test plate, and cut into a size of 5 mm × 20 mm to form a test piece. The test piece is subjected to dynamic viscoelasticity measurement using a forced stretching vibration type viscoelasticity measuring apparatus ("VIBRON" manufactured by Orientec Co., Ltd.) under conditions of a temperature raising rate of 2°C/min and a measurement frequency of 8 Hz. A loss tangent tanδ at -20°C is determined from the phase difference generated between the stress and the vibration strain generated during the temperature raising. The dynamic Tg of the coating film is defined as the temperature at which the loss tangent tanδ is the maximum value. The "loss tangent tanδ" is a value measured in accordance with the tensile vibration - non-resonance method of JIS K7244-4:1999.

### <Article to be coated>

Examples of an article to be coated to which the composition for a coating material is to be applied include steel plates of metal such as iron, steel, stainless steel, aluminum, copper, zinc, and tin and alloys thereof; resins such as ethylene-vinyl acetate (EVA) resin, polyolefin resins (polyethylene resin, polypropylene resin, etc.), vinyl chloride resin, styrol resin, polyester resins (including polyethylene terephthalate (PET) resin, polybutylene terephthalate (PBT) resin, etc.), unsaturated polyester resin, polycarbonate resin, acrylic resin, acrylonitrile-butadiene-styrene (ABS) resin, acrylonitrile-styrene (AS) resin, polyamide resin, acetal resin, phenol resin, fluororesin, melamine resin, urethane resin, epoxy resin, and polyphenylene oxide (PPO); and organic-inorganic hybrid materials. These may have been molded. The composition for a coating material of the present invention exhibits an effect particularly when the article to be coated is a material likely to be electrically charged, such as polyolefin resins (polyethylene resin, polypropylene resin, etc.), styrol resin, polyester resin (PET resin, PBT resin, etc.), and polycarbonate resin, or an unsaturated polyester resin used to be used for fiber-reinforced plastics (FRP) or carbon fiber-reinforced plastics (CFRP).

The method of application of the composition for a coating material of the present invention is not particularly limited, and the composition for a coating material can be applied by a commonly used application method. For example, when the composition for a coating material of the present invention is applied to a car body, it can be applied by multi-stage application, preferably two stage application with use of air-electrostatic spray, or alternatively, there can be used an application method combining air electrostatic spray and a rotary atomization type electrostatic applicator, which is so-called "µµ (micro micro) bell", "µ (micro) bell", "metallic bell" or the like, in order to improve the appearance of a resulting coating film. In the case of coating a film or the like, such a method as roll coating, kiss roll coating, gravure coating, bar coating, knife coating, curtain coating, lip coating, or extrusion coating using a die coater or the like can be used. Furthermore, it is also possible to employ hand application, brush application, or the like using fibers impregnated with the composition for a coating material of the present invention, and for example, it is possible to employ a method in which a dried sponge or a fiber such as waste is impregnated with an appropriate amount of the composition, the composition is thinly spread by hands on a surface of a base material, and then a coating film is formed by natural drying or forced drying using a dryer or the like.

The film thickness of the coating film formed from the composition for a coating material of the present invention is, for example, preferably 0.5 µm to 50 µm, and more preferably 1 µm to 30 µm as a dry film thickness.

### EXAMPLES

The present invention will be described hereafter in more detail by way of examples, to which the present invention is not intended to be limited. In the examples, "parts" and "%" are on a mass basis unless otherwise indicated.

### [Production of copolymer]

### Production Example 1 Production of siloxane group-containing polymer (A-1)

A flask equipped with an argon gas inlet tube and a stirring blade was charged with 1.49 g of ethyl-2-methyl-2-n-butyltellanyl-propionate (BTEE), 0.92 g of dibutyl ditelluride (DBDT), 42 g of 2-hydroxyethyl methacrylate (HEMA), 98 g of isobutyl methacrylate (iBMA), 0.33 g of 2,2'-azobis(isobutyronitrile) (AIBN), and 140 g of butyl acetate (first monomer composition), and the mixture was reacted at 60°C for 36 hours to polymerize a B block.

A mixed solution (second monomer composition) of 60.0 g of a polysiloxane group-containing acrylic monomer (X-22-174ASX [functional group equivalent (g/mol): 900] [number average molecular weight: 900] manufactured by Shin-Etsu Chemical Co., Ltd.: abbreviated as "PDMSA" in Table 1) previously purged with argon, 0.33 g of 2,2'-azobis(isobutyronitrile), and 60 g of butyl acetate was added to the reaction solution, and the mixture was reacted at 60°C for 36 hours to polymerize an A block. Characteristic value of the resulting AB block siloxane group-containing polymer (A-1) are shown in Table 1. In Table 1 are given the formulation of monomer, the molecular weight (weight average molecular weight), the molecular weight distribution (Mw/Mn), the hydroxyl value, and the production method (TERP/FRP) of the siloxane group-containing polymer (A-1).

### Production Example 2 Production of siloxane group-containing polymer (A-2)

A flask equipped with an argon gas inlet tube and a stirring blade was charged with 1.49 g of BTEE, 0.92 g of DBDT, 42 g of HEMA, 78 g of dicyclopentanyl methacrylate (DCPMA), 0.33 g of AIBN, and 120 g of butyl acetate (first monomer composition), and the mixture was reacted at 60°C for 36 hours to polymerize a B block.

A mixed solution (second monomer composition) of 60.0 g of a polysiloxane group-containing acrylic monomer (X-22-174ASX [functional group equivalent (g/mol)]: 900] [number average molecular weight: 900] manufactured by Shin-Etsu Chemical Co., Ltd.: abbreviated as "PDMSA" in Table 1) previously purged with argon, 0.33 g of 2,2'-azobis(isobutyronitrile), and 60 g of butyl acetate was added to the reaction solution, and the mixture was reacted at 60°C for 36 hours to polymerize an A block. Physical properties of the resulting AB block siloxane group-containing polymer (A-1) are shown in Table 1. In Table 1 are given the formulation of monomer, the molecular weight (weight average molecular weight), the molecular weight distribution (Mw/Mn), the hydroxyl value, and the production method (TERP/FRP) of the siloxane group-containing polymer (A-1).

### Production Example 3 Production of siloxane group-containing polymer (A-3)

A flask equipped with an argon gas inlet tube and a stirring blade was charged with 1.49 g of BTEE, 0.92 g of DBDT, 42 g of HEMA, 78 g of isobomyl methacrylate (IBXMA), 0.33 g of AIBN, and 120 g of butyl acetate (first monomer composition), and the mixture was reacted at 60°C for 36 hours to polymerize a B block.

A mixed solution (second monomer composition) of 60.0 g of a polysiloxane group-containing acrylic monomer (X-22-174ASX [functional group equivalent (g/mol)]: 900] [number average molecular weight: 900] manufactured by Shin-Etsu Chemical Co., Ltd.: abbreviated as "PDMSA" in Table 1) previously purged with argon, 0.33 g of 2,2'-azobis(isobutyronitrile), and 60 g of butyl acetate was added to the reaction solution, and the mixture was reacted at 60°C for 36 hours to polymerize an A block. Characteristic value of the resulting AB block siloxane group-containing polymer (A-3) are shown in Table 1. In Table 1 are given the formulation of monomer, the molecular weight (weight average molecular weight), the molecular weight distribution (Mw/Mn), the hydroxyl value, and the production method (TERP/FRP) of the siloxane group-containing polymer (A-3).

### Production of hydroxyl group-containing polymer (C-1)

A 2 L separable flask equipped with a temperature controller, a stirring blade, a reflux tube, and a nitrogen introduction port was charged with 444.27 g of butyl acetate, and the inside of the flask was filled with a nitrogen atmosphere, and then the temperature was raised to 130°C and kept constant. And then, a mixed solution of 255 g of styrene (ST), 8.5 g of methacrylic acid (MAA), 394.4 g of HEMA, 117.47 g of 2-ethylhexyl acrylate (EHA), 74.72 g of iBMA, and 102 g of Kayaester O was placed in a dropping funnel, and was added dropwise over 3 hours.

Subsequently, the reaction was continued for 1 hour, and then a mixed solution of 204 g of butyl acetate and 20.4 g of Kayaester O was added dropwise as a post-initiator over 30 minutes. The reaction was further continued for 1 hour, and dilution was conducted with butyl acetate such that the solid content was 60%, thereby affording a hydroxyl group-containing polymer (C-1). In Table 1 are given the weight average molecular weight (Mw), the molecular weight distribution (Mw/Mn), the hydroxyl value, and the production method (TERP/FRP) of the hydroxyl group-containing polymer (C).

### (Examples 1 to 9 and Comparative Examples 1 to 3)

### Preparation of coating composition and coating film

A coating composition prepared by mixing a siloxane group-containing polymer (A) (one of A-1 to A-3), one or both of Z4470 having an IPDI isocyanurate structure (manufactured by Covestro AG, NCO% = 11.8) and N3600 having an HDI isocyanurate structure (manufactured by Covestro AG, NCO% = 23) as a crosslinking agent (B), and a hydroxyl group-containing polymer (C-1) in the formulations given in Table 1, and diluting the resin components to 50% by mass using butyl acetate was applied to a tin plate using an applicator such that the dry film thickness was 30 µm, and a test piece was left to stand for 7 minutes in a coating environment specified by a temperature of 20 ± 5°C and a relative humidity of 78% or less. Comparative Examples 2 and 3 are examples in which no siloxane group-containing polymer is blended.

Then, the test piece was dried and heat-cured at 140°C for 30 minutes using a hot air dryer to afford a test piece having a substrate and a coating film. The formulation and dynamic glass transition temperature (dynamic Tg) of the coating films obtained are shown in Table 1.

### [Measurement of dynamic Tg]

A coating composition obtained is applied to a polypropylene test plate with an air spray such that the dry film thickness of a single film is 30 µm, and then the coating composition is heated and cured at 140°C for 30 minutes to form a coating film. Next, the coating film was peeled off from the test plate, and cut into a size of 5 mm × 20 mm to form a test piece. The test piece was subjected to dynamic viscoelasticity measurement using a forced stretching vibration type viscoelasticity measuring apparatus ("VIBRON" manufactured by Orientec Co., Ltd.) under conditions of a temperature raising rate of 2°C/min and a measurement frequency of 8 Hz. A loss tangent tanδ at -20°C was determined from the phase difference generated between the stress and the vibration strain generated during the temperature raising. The dynamic Tg of the coating film is defined as the temperature at which the loss tangent tanδ is the maximum value. The "loss tangent tanδ" is a value measured in accordance with the tensile vibration - non-resonance method of JIS K7244-4:1999. The values obtained are described in Table 1.

**[Table 1]**

| | | | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|---|---|
| Siloxane group-containing polymer (A) | | | A-1 | A-1 | A-1 | A-1 | A-1 | A-1 | A-2 | A-3 | A-3 | A-2 | | |
| | Siloxane-containing monomer | PDMSA | 30 | 30 | 30 | 30 | 30 | 30 | 30 | 30 | 30 | 30 | | |
| | Hydroxyl group-containing monomer | HEMA | 21 | 21 | 21 | 21 | 21 | 21 | 21 | 21 | 21 | 21 | | |
| | Other copolymerizable monomers | IBMA | 49 | 49 | 49 | 49 | 49 | 49 | | | | | | |
| | | DCPMA | | | | | | | 49 | | | 49 | | |
| | | IBXMA | | | | | | | | 49 | 49 | | | |
| | Molecular weight | Mw | 50,000 | 50,000 | 50,000 | 50,000 | 50,000 | 50,000 | 41,000 | 45,000 | 45,000 | 50,000 | | |
| | Molecular weight distribution | Mw/Mn | 1.40 | 1.40 | 1.40 | 1.40 | 1.40 | 1.40 | 1.40 | 1.40 | 1.40 | 1.40 | | |
| | Characteristic value | Hydroxyl value | 90 | 90 | 90 | 90 | 90 | 90 | 90 | 90 | 90 | 90 | | |
| | Production method | TERP/FRP | TERP | TERP | TERP | TERP | TERP | TERP | TERP | TERP | TERP | TERP | | |
| | Formulation | (parts) | 20 | 20 | 20 | 20 | 20 | 50 | 100 | 100 | 100 | 20 | 0 | 0 |
| Hydroxyl group-containing polymer (C) | | | C-1 | C-1 | C-1 | C-1 | C-1 | C-1 | | | | C-1 | C-1 | C-1 |
| | Molecular weight | Mw | 8200 | 8200 | 8200 | 8200 | 8200 | 8200 | | | | 8200 | 8200 | 8200 |
| | Molecular weight distribution | Mw/Mn | 2.1 | 2.1 | 2.1 | 2.1 | 2.1 | 2.1 | | | | 2.1 | 2.1 | 2.1 |
| | Characteristic value | Hydroxyl value | 160 | 160 | 160 | 160 | 160 | 160 | | | | 160 | 160 | 160 |
| | Production method | TERP/FRP | FRP | FRP | FRP | FRP | FRP | FRP | | | | FRP | FRP | FRP |
| | Formulation | (parts) | 80 | 80 | 80 | 80 | 80 | 50 | 0 | 0 | 0 | 80 | 100 | 100 |
| Crosslinking agent (B) | NCO/OH | - | 1 | 1 | 1 | 1 | 1 | 1 | 1 | 1 | 1 | 1 | 1 | 1 |
| | Formulation (Z4470) | (parts) | 64.9 | 48.5 | 27.4 | 21.3 | 100 | 23.5 | 0.0 | 16.9 | 0.0 | 0.0 | 30.1 | 0.0 |
| | Formulation (N3600) | (parts) | 0.0 | 12.1 | 27.4 | 32.0 | 40.1 | 23.5 | 29.3 | 16.9 | 29.3 | 47.6 | 30.1 | 52.1 |
| | Dynamic Tg | | 180 | 159 | 132 | 119 | 110 | 142 | 166 | 210 | 155 | 93 | 135 | 97 |

The performance of the coating films obtained was evaluated by the methods described below, and the results are shown in Table 2.

### [Water stain test (water stain removability after 60*20 min)]

Hard water (trade name: Evian) was sprayed onto a coating film obtained in an example or a comparative example with an atomizer at a distance of about 20 cm from the coated plate such that droplets were uniformly present on the coated plate. This was dried in a hot air dryer at 60°C for 10 minutes to allow water stain to adhere to the coating film. The coating film was washed with a sponge back and forth 10 times in running tap water, and then, the water stain remaining on the coating film was visually judged.
⊙... No water stain is adhered.
∘... Almost all water stain is removed. Water stain in small dots remains.
×... Water stain is adhered in a ring like a coffee ring. (The appearance is unacceptable.)

### [Water stain test (water stain removability after 80°C* 10 min)]

80°C is the temperature of the hood of a black car under the blazing sun in the summertime, and is a test in a severe environment.

Hard water (trade name: Evian) was sprayed onto a coating film obtained in an example or a comparative example with an atomizer at a distance of about 20 cm from the coated plate such that droplets were uniformly present on the coated plate. This was dried in a hot air dryer at 60°C for 10 minutes to allow water stain to adhere to the coating film. The coating film was washed with a sponge back and forth 10 times in running tap water, and then, the water stain remaining on the coating film was visually judged.
⊙... No water stain is adhered.
∘... Almost all water stain is removed. Water stain in small dots remains.
×... Water stain is adhered in a ring like a coffee ring. (The appearance is unacceptable.)

### [Carbon test after adhesion of water stain]

Hard water (trade name: Evian) was sprayed onto a coating film obtained in an example or a comparative example with an atomizer at a distance of about 20 cm from the coated plate such that droplets were uniformly present on the coated plate. This was dried in a hot air dryer at 80°C for 10 minutes to allow water stain to adhere to the coating film. These coated plates were each immersed in a 1wt% carbon dispersion aqueous solution (FW -100 manufactured by Carbon Pigment Orion Engineered Carbons) 10 times by vertical up-and-down movement, and dried again in a hot air dryer at 80°C for 10 minutes. While pure water was poured on the coated plate to which the carbon dirt adhered, a flannel fabric was reciprocated on the coated plate up-and-down and left-and-right 10 times, and the degree of dirt by the remaining carbon was visually judged.
○... There is no carbon dirt.
△... Carbon dirt is scattered and remains a little.
×... Carbon dirt adheres to places where water stain remains, and dirt remains. (The appearance is unacceptable.)

### [Contact angle and evaluation of hydrophobilicy]

Using a DMo-701 model contact angle meter manufactured by Kyowa Interface Science Co., Ltd., about 1 µL of distilled water was deposited on a coating film surface under an atmosphere of 25°C and 55% RH, and an angle formed by the droplet and the coating film surface after 10 seconds was calculated by a 0/2 method.
○... The contact angle is 85 degrees or more.
×... The contact angle is less than 85 degrees.

### [Cleanability of mud and soil dirt]

Class 11 of JIS test dust and hard water (trade name: Evian) were blended in a ratio of 5 : 95 wt% to form a 5 wt% suspension of class 11 of JIS test dust as a pollutant dispersion, and the pollutant dispersion was sprayed with an atomizer at a distance of about 20 cm from a coated plate such that droplets were uniformly present on the coated plate. This was dried in a hot air dryer at 60°C for 10 minutes. The obtained test piece on which the droplets of the pollutant were placed was uniformly washed with tap water for 30 seconds on the coating film, and then the dirt remaining on the coating film after two reciprocating washes with a sponge was visually judged.
○... There are no marks of dried water droplets, and no dirt remains on the coating film.
×... Slight dirt has adhered.

### [Bending test]

A coating film was peeled from a polypropylene plate coated with the coating film and cured, and then a bending test was performed. The bendability was evaluated according to the following criteria.
⊙... No abnormality is observed in the coating film even after repeated bending.
○... The coating film is cracked.

### [Solvent resistance]

2 µl of toluene was dropped onto a coating film, and the coating film was allowed to stand for 5 minutes. After 5 minutes, the appearance after wiping with dry waste was evaluated according to the following criteria.
⊙... No abnormality is observed in the coating film appearance.
○... A slight liquid droplet mark remains.

**[Table 2]**

| | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|
| Water stain test (water stain removability after 60°C*20 min) | ⊙ | ⊙ | ⊙ | ⊙ | ○ | ⊙ | ⊙ | ⊙ | ⊙ | × | ○ | × |
| Water stain test (water stain removability after 80°C* 10 min) | ⊙ | ⊙ | ⊙ | ○ | Δ | ⊙ | ⊙ | ⊙ | ⊙ | × | ○ | × |
| Carbon test after adhesion of water stain | ○ | ○ | ○ | ○ | Δ | ○ | ○ | ○ | ○ | × | Δ | × |
| Contact angle | 99 | 99 | 99 | 99 | 99 | 99 | 100 | 100 | 100 | 100 | 80 | 81 |
| Evaluation of hydrophobilicy | ○ | ○ | ○ | ○ | ○ | ○ | ○ | ○ | ○ | ○ | × | × |
| Cleanability of mud and soil dirt | ○ | ○ | ○ | ○ | ○ | ○ | ○ | ○ | ○ | ○ | × | × |
| Bending test | ○ | ⊙ | ⊙ | ⊙ | ⊙ | ⊙ | ○ | ○ | ⊙ | ⊙ | ⊙ | ⊙ |
| Solvent resistance | ⊙ | ⊙ | ⊙ | ⊙ | ⊙ | ⊙ | ○ | ○ | ○ | ⊙ | ⊙ | ⊙ |

As is clear from Table 2, the coatings of Examples are superior in water stain removability and also superior in hydrophobilicy. Comparative Example 1 is an example in which the dynamic Tg of the coating film is lower than 100°C, and the water stain performance is not good. Comparative Example 2 contains no siloxane group-containing polymer (A), and is poor in hydrophobilicy and dirt removability. As described above, Comparative Example 3 is an example in which the dynamic Tg of the coating film is lower than 100°C and no siloxane group-containing polymer is blended, and it is poor in water stain removability, hydrophobilicy, and dirt property.

## Claims

1. A composition for a coating material, comprising a siloxane group-containing polymer (A) and a crosslinking agent (B), wherein
the siloxane group-containing polymer (A) is a block copolymer including an A block and a B block, contains, in the A block, at least a structural unit derived from a siloxane group-containing vinyl monomer (a), and contains, in the B block, a structural unit derived from a hydroxyl group-containing vinyl monomer (b) and, as necessary, a structural unit derived from another vinyl monomer (c) copolymerizable with the vinyl monomers (a) and (b),
the siloxane group-containing polymer (A) is a copolymer having a molecular weight distribution (Mw/Mn) of 2.0 or less and polymerized by living radical polymerization, and
the composition has a dynamic glass transition temperature of 100 to 300°C under conditions of a temperature raising rate of 2°C/min and a frequency of 8 Hz when cured.

2. The composition for a coating material according to claim 1, wherein the siloxane group-containing polymer (A) is an AB-type diblock copolymer or an ABA-type triblock copolymer.

3. The composition for a coating material according to claim 1 or 2, wherein the siloxane group-containing polymer (A) has a weight average molecular weight (Mw) of 5,000 to 100,000.

4. The composition for a coating material according to any one of claims 1 to 3, wherein the living radical polymerization is a method in which the polymerization is performed using an organic tellurium compound represented by a formula (1) below: 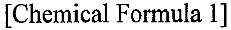 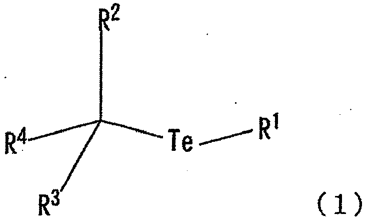 wherein R¹ represents a C₁ to C₈ alkyl group, aryl group, substituted aryl group, or aromatic heterocyclic group, R² and R³ each represent a hydrogen atom or a C₁ to C₈ alkyl group, R⁴ represents an aryl group, a substituted aryl group, an aromatic heterocyclic group, an acyl group, an oxycarbonyl group, or a cyano group.

5. The coating composition according to any one of claims 1 to 4, wherein the siloxane group-containing polymer (A) is a (meth)acrylic copolymer.

6. The coating composition according to any one of claims 1 to 5, wherein the other copolymerizable vinyl monomer (c) is an alicyclic hydrocarbon group-containing (meth)acrylate.

7. The composition for a coating material according to any one of claims 1 to 6, further comprising a hydroxyl group-containing polymer (C).

8. The composition for a coating material according to any one of claims 1 to 7, wherein a mixing ratio of the siloxane group-containing polymer (A) and the hydroxyl group-containing polymer (C) is 15 : 85 to 80 : 20 in terms of a weight ratio of the siloxane group-containing polymer (A) : the hydroxyl group-containing polymer (C).

9. The composition for a coating material according to any one of claims 1 to 8, wherein the siloxane group-containing vinyl monomer (a) has a number average molecular weight (Mn) of 500 to 50,000.

10. The composition for a coating material according to any one of claims 1 to 9, wherein the crosslinking agent (B) is a combination of an alicyclic polyisocyanate (B-1) and an aliphatic polyisocyanate (B-2).
